(19) **Europäisches Patentamt / European Patent Office / Office européen des brevets**

(11) **EP 2 865 158 B1**

(12) **FASCICULE DE BREVET EUROPEEN**

(45) Date de publication et mention de la délivrance du brevet:
**08.08.2018 Bulletin 2018/32**

(51) Int Cl.:
***H04L 29/06*** *(2006.01)*

(21) Numéro de dépôt: **13744625.8**

(22) Date de dépôt: **25.06.2013**

(86) Numéro de dépôt international:
**PCT/FR2013/051480**

(87) Numéro de publication internationale:
**WO 2014/001708 (03.01.2014 Gazette 2014/01)**

(54) **PROCEDE D'AUTHENTIFICATION DE PAQUETS DE DONNEES RECUS PAR UNE STATION D'UN SYSTEME DE TELECOMMUNICATIONS NUMERIQUE**

VERFAHREN ZUR AUTHENTIFIZIERUNG VON AN EINER STATION EINES DIGITALEN TELEKOMMUNIKATIONSSYSTEMS EMPFANGENEN DATENPAKETEN

METHOD FOR AUTHENTICATING DATA PACKETS RECEIVED BY A STATION OF A DIGITAL TELECOMMUNICATIONS SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2012 FR 1256015**

(43) Date de publication de la demande:
**29.04.2015 Bulletin 2015/18**

(73) Titulaire: **SIGFOX**
**31670 Labège (FR)**

(72) Inventeurs:
- **FOURTET, Christophe**
**F-82170 Pompignan (FR)**
- **SELLIER, Laurence**
**F-31000 Toulouse (FR)**

(74) Mandataire: **Ipside**
**6, Impasse Michel Labrousse**
**31100 Toulouse (FR)**

(56) Documents cités:
**US-A1- 2001 004 375**

EP 2 865 158 B1

## Description

### Domaine technique

La présente invention appartient au domaine des télécommunications numériques, et concerne plus particulièrement l'authentification de paquets de données émis par des terminaux et reçus par une station.

### Etat de la technique

L'authentification de paquets de données reçus par une station vise à vérifier l'identité du terminal ayant émis ces paquets de données.

De nombreux procédés d'authentification sont connus, généralement applicables à des systèmes de télécommunication de type déterministes et syntonisés. De tels systèmes sont :

- soit basés sur des échanges bidirectionnels entre un terminal et une station par lesquels le terminal et la station se synchronisent et s'authentifient mutuellement ;
- soit basés sur des échanges unidirectionnels entre un terminal et une station de réception, et sur une organisation temporelle et/ou fréquentielle déterministe et connue à l'avance permettant d'obtenir la synchronisation du terminal et de la station.

En outre, dans ce type de système déterministe et syntonisé, l'erreur de fréquence acceptable doit être inférieure, ou de l'ordre de grandeur de la bande passante du système.

Or, dans un système de télécommunication syntonisé, comme celui présenté dans le document US 2001/004375, les terminaux et la station considèrent une même liste prédéfinie de bandes fréquentielles dans lesquelles les paquets de données peuvent être émis. De ce fait, dans ce type de système, il est possible de vérifier si la séquence prédéfinie de sauts de fréquence a été respectée en comparant directement la bande fréquentielle mesurée à la bande fréquentielle attendue parmi les bandes fréquentielles de la liste prédéfinie.

Ce type de vérification n'est plus possible dans les systèmes de télécommunications non syntonisés car il existe une inadéquation entre les bandes fréquentielles utilisées par les terminaux et les bandes fréquentielles théoriques attendues par la station réceptrice. Ceci est d'autant plus vrai lorsque la dérive fréquentielle des moyens de synthèse fréquentielle des terminaux est importante. De tels systèmes non déterministes comprennent des systèmes unidirectionnels dans lesquels les communications sont possibles uniquement du terminal vers la station. Un tel système télécommunication dans lequel la dérive des moyens de synthèse fréquentielle des terminaux est supérieure à la largeur spectrale instantanée des paquets de données émis par lesdits terminaux, est présenté dans le document WO 2011/154466.

On comprend donc que les procédés d'authentification développés pour les systèmes de télécommunication déterministes et syntonisés ne sont pas applicables à des systèmes de télécommunications de type non déterministes, non synchronisés et non syntonisés, dans lesquels l'organisation temporelle et fréquentielle des communications entre le terminal et la station ne répond à aucun impératif de prédétermination, de synchronisation ou de syntonisation. En outre, dans ce type de systèmes non syntonisés, l'erreur de fréquence peut être supérieure à la bande passante du système.

Par ailleurs, les procédés d'authentification conventionnels reposent généralement sur l'inclusion dans les paquets de données, outre d'un code d'identification du terminal, de données de contrôle additionnelles dédiées à l'authentification dudit terminal ayant émis lesdits paquets de données.

L'ajout de ces données de contrôle dédiées à l'authentification du terminal contribue à réduire le rapport entre la quantité de données utiles et la quantité de données de contrôle présentes dans chaque paquet de données. Ce rapport sera d'autant plus réduit que la quantité de données utiles présente dans chaque paquet de données est faible, comme c'est par exemple le cas dans les systèmes de télécommunications bas débit.

### Exposé de l'invention

La présente invention a pour objectif de remédier à tout ou partie des limitations des solutions de l'art antérieur, notamment celles exposées ci-avant, dans le cas de systèmes de télécommunications numériques de type unidirectionnel et non-déterministes. Dans de tels systèmes, chaque terminal émet successivement des paquets de données dans une pluralité de bandes fréquentielles différentes qui ne sont pas prédéterminées, et selon une séquence de sauts de fréquence prédéfinie et spécifique du terminal. Par ailleurs, chaque paquet de données incorpore un code d'identification du terminal l'ayant émis.

A cet effet, et selon un premier aspect, l'invention concerne un procédé d'authentification comprenant, pour chaque paquet de données reçu par un système récepteur comprenant au moins une station :

- la mesure, par la station ayant reçu le paquet de données considéré, de la bande fréquentielle dans laquelle le paquet de données considéré a été reçu,
- l'extraction du code d'identification contenu dans le paquet de données considéré,
- le calcul d'un saut de fréquence, à partir de la bande fréquentielle mesurée du paquet considéré et d'une bande fréquentielle mesurée par le système récepteur pour un précédent paquet de données reçu incorporant un code d'identification identique au code d'identification extrait,
- la détermination, en fonction de la séquence de sauts de fréquence prédéterminée associée au code d'identification extrait du paquet de données considéré, d'un saut de fréquence théorique appliqué depuis le précédent paquet de données reçu, et

- le calcul d'un écart de saut de fréquence en fonction du saut de fréquence théorique et du saut de fréquence calculé.

En outre, le procédé d'authentification comprend une étape de détermination si les paquets de données reçus successivement avec un même code d'identification ont été émis par le terminal associé au code d'identification extrait en fonction d'au moins un écart de saut de fréquence calculé pour l'un des paquets de données.

En résumé, pour chaque paquet de données, un écart de saut de fréquence est calculé en fonction du saut de fréquence théorique, de la bande fréquentielle mesurée pour le paquet de données considéré et de la bande fréquentielle mesurée pour le précédent paquet de données reçu avec le même code d'identification. Le procédé d'authentification est donc robuste à l'absence éventuelle de syntonisation entre les terminaux et la station.

Le système récepteur selon l'invention peut être formé soit d'un ensemble constitué d'une ou de plusieurs stations, soit d'un ensemble constitué d'un ou de plusieurs stations en coopération avec un serveur de traitement.

Ainsi, la mesure de la bande fréquentielle d'émission du paquet de données considéré est réalisée dans le référentiel de la station ayant reçu le paquet de données considéré. De ce fait, dans le cas où le système récepteur comprend notamment plusieurs stations, chaque station réalisera les mesures des bandes fréquentielles des paquets qu'il reçoit. Ces mesures de bande fréquentielle sont ainsi obtenues indépendamment des conditions d'émission par le terminal et des différences de conditions de réception entre les stations.

En outre, dans certaines conditions extrêmes de réception, on peut observer pendant la réception d'un même paquet, une variation de fréquence dans le référentiel de réception. Cela conduit à une ambigüité dans le calcul de l'écart de saut de fréquence. Dans ces conditions, la décision d'authentification peut être basée sur le cumul des écarts de plusieurs sauts de fréquence calculés successivement, ou toute autre opération statistique appliquée à une série de valeurs d'écarts de saut de fréquences calculés successivement.

Dans une variante, il est également possible de mettre en place un système d'apprentissage par rapport à l'historique des écarts calculés, et d'ajuster dynamiquement le critère de seuil relatif à la différence maximale acceptable entre les écarts.

De telles dispositions permettent d'écarter des paquets de données émis par un terminal malveillant essayant de se faire passer pour un terminal autorisé. En effet, on comprend que si un terminal malveillant essaie de se faire passer pour un terminal autorisé en utilisant le code d'identification dudit terminal autorisé, mais sans connaître la séquence de sauts de fréquence prédéfinie associée audit terminal autorisé, le ou les écarts de sauts de fréquence calculés seront importants et permettront de déterminer que tout ou partie de ces paquets de données ont été émis par un terminal malveillant.

Le procédé d'authentification objet de l'invention est particulièrement adapté aux systèmes de télécommunications non syntonisés, c'est-à-dire dans lesquels les terminaux et la station ne sont pas synchronisés en fréquence. En outre, une telle authentification ne nécessite pas de prérequis notoire sur le système de télécommunication, et est donc applicable par extension à tout système de télécommunication, unidirectionnel ou non, syntonisé ou non, synchronisé ou non.

Par ailleurs, il est à noter qu'un tel procédé d'authentification est particulièrement adapté aux systèmes de télécommunications bas débit.

A titre d'exemple illustratif, on considère un terminal émettant systématiquement avec un biais fréquentiel δF par rapport à la station réceptrice, c'est-à-dire que ledit terminal émet dans une bande fréquentielle F1+δF lorsqu'il est censé émettre dans une bande fréquentielle F1, puis dans une bande fréquentielle F2+δF au lieu de F2 (F2 étant égal à F1+ΔF, ΔF étant le saut de fréquence théorique), etc. Dans ce cas, l'écart de bande fréquentielle, c'est-à-dire l'écart entre la bande fréquentielle dans laquelle le terminal émet et la bande fréquentielle théorique attendue par la station, est toujours sensiblement égal à δF (aux erreurs de mesure près lorsque les conditions environnementales sont équivalentes, en terme de température et de tension). L'écart de saut de fréquence est lui sensiblement nul (aux erreurs de mesure près) puisque le saut de fréquence entre la bande fréquentielle F1+δF et la bande fréquentielle F2+δF est égal au saut de fréquence théorique ΔF.

Dans des modes particuliers de mise en oeuvre, le procédé d'authentification comporte l'une ou plusieurs des caractéristiques suivantes, prises isolément ou selon toutes les combinaisons techniquement possibles.

Dans un mode particulier de mise en oeuvre, la bande fréquentielle d'un paquet de données est mesurée plusieurs fois au cours de chaque paquet de données, et l'écart de saut de fréquence est calculé en considérant la bande fréquentielle mesurée finale du paquet de données considéré et la bande fréquentielle mesurée finale du précédent paquet de données incorporant le même code d'identification que le paquet de données considéré.

De telles dispositions permettent d'éviter certains cas d'échecs d'authentification, dans le cas notamment de terminaux dont la dérive fréquentielle des moyens de synthèse fréquentielle est importante (comme par exemple le système présenté dans le document WO 2011/154466), et dont la bande fréquentielle utilisée par un terminal peut varier de façon non négligeable au sein d'un même paquet de données.

Dans ce cas de figure, le comportement de dérive fréquentielle à l'allumage d'un oscillateur d'un terminal émetteur présente un motif particulier unique et parfaitement répétable, modélisable en fonction du temps. Ce motif particulier représente une sorte de « signature » qui dépend de l'assemblage unique des composants électroniques dans le terminal émetteur. En pratique, on peut avantageusement tirer parti de cette signature en considérant la bande fréquentielle mesurée à la fin du paquet de données considéré et la bande fréquentielle mesurée à la fin du précédent paquet de données incorporant le même code d'identification, et présentant donc le même motif de dérive fréquentielle (tout autre paramètre environnemental étant considéré constant). On comprend que les variations de bande fréquentielle sur deux trames successives ou non, et de même longueur sera identique si elles sont mesurées au même moment par rapport à l'allumage des circuits du terminal émetteur.

De ce fait, afin de renforcer le procédé d'authentification objet de l'invention, il est possible de mettre en oeuvre des étapes complémentaires en exploitant la dérive fréquentielle de l'oscillateur du terminal émetteur. Ainsi, avantageusement, le procédé d'authentification peut en outre comprendre, pour chaque paquet de données reçu par le système récepteur :

- la mesure, par ce système récepteur, d'un motif de dérive fréquentielle d'un oscillateur ayant servi à générer le paquet de données considéré, et
- la comparaison du motif de dérive fréquentielle mesuré avec un motif de dérive fréquentielle prédéfini associé audit code d'identification extrait dudit paquet de données considéré.

En particulier, dans un contexte d'économie de la batterie du terminal émetteur, il n'est pas souhaitable de mettre l'oscillateur en fonctionnement bien avant l'envoi d'une trame, pour laisser le temps à l'oscillateur de se stabiliser. De ce fait, dans ce contexte d'économie, l'oscillateur est généralement activé juste au moment de l'envoi de la trame et la trame contient donc forcément la « signature » représentative de la dérive fréquentielle de l'oscillateur.

Par exemple, la bande fréquentielle d'un paquet de données peut être mesurée plusieurs fois au cours de chaque paquet de données. Ces mesures multiples peuvent ainsi servir à établir le modèle du motif particulier unique de comportement de dérive fréquentielle du terminal émetteur, à savoir sa « signature », sur le paquet donné. Ce modèle peut ensuite être comparé à un motif de référence unique et connu du terminal émetteur ayant émis le paquet et relevé par exemple lors de sa fabrication ou de sa mise en service.

En pratique, afin de pouvoir déterminer le saut de fréquence théorique correspondant à deux paquets reçus consécutivement, il est avantageux de s'assurer que ces deux paquets ont été émis consécutivement. Lorsque des trames perdues sont détectées, il est avantageux de recalculer l'écart de saut de fréquence théorique en fonction du nombre de trames perdues.

Ainsi, dans un mode particulier de mise en oeuvre, le procédé d'authentification comprend, après l'étape d'extraction du code d'identification à partir du paquet de données considéré, une étape d'estimation d'un nombre de paquets de données perdus, lesdits paquets de données perdus correspondant à des paquets de données qui ont été émis par le terminal associé audit code d'identification depuis que le précédent paquet de données incorporant ledit code d'identification a été reçu, mais qui n'ont pas été reçus par le système récepteur, et notamment par la station. Le saut de fréquence théorique pour le paquet de données considéré est alors déterminé en fonction du nombre de paquets de données perdus et de la séquence de sauts de fréquence associée audit code d'identification.

De telles dispositions permettent également d'éviter certains cas d'échecs d'authentification. En effet, le saut de fréquence entre deux paquets de données reçus par la station peut correspondre à la somme de plusieurs sauts de fréquence consécutifs, si des paquets de données ont été émis entre lesdits deux paquets de données mais n'ont pas été reçus par la station. L'estimation du nombre de paquets perdus permet alors de déterminer le nombre de sauts de fréquence effectués, et par conséquent d'estimer le saut de fréquence théorique comme étant la somme desdits sauts de fréquence effectués.

Dans un mode particulier de mise en oeuvre, dans lequel les paquets de données incorporent un compteur incrémenté par le terminal à chaque nouvelle émission, le nombre de paquets perdus est estimé en fonction du compteur du paquet de données considéré et du compteur du précédent paquet de données reçu incorporant le même code d'identification que ledit paquet de données considéré.

Dans un mode particulier de mise en oeuvre, dans lequel les paquets de données comportent une partie chiffrée au moyen d'un clé tournante incrémentée par le terminal à chaque nouvelle émission, le nombre de paquets perdus est estimé en fonction de la clé tournante utilisée pour le paquet de données considéré et de la clé tournante utilisée pour le précédent paquet de données reçu incorporant le même code d'identification que ledit paquet de données considéré.

Dans un mode particulier de mise en oeuvre, dans lequel les paquets de données sont émis par un terminal avec une période prédéfinie, le nombre de paquets perdus est estimé en fonction de ladite période et d'un écart temporel entre la réception du paquet de données considéré et la réception du précédent paquet de données incorporant le même code d'identification que ledit paquet de données considéré.

Dans un mode particulier de mise en oeuvre, les paquets de données reçus successivement avec un même code d'identification ne sont considérés comme ayant été émis par le terminal associé audit code d'identification que si chaque écart de saut de fréquence considéré pour l'authentification est de valeur absolue inférieure à une valeur seuil.

De préférence, la valeur seuil à utiliser pour le paquet de données considéré est déterminée en fonction d'un écart temporel entre la réception du paquet de données considéré et la réception du précédent paquet de données incorporant le même code d'identification que ledit paquet de données considéré.

Dans un mode particulier de mise en oeuvre, dans lequel plusieurs écarts de saut de fréquence sont considérés pour l'authentification, les paquets de données reçus successivement avec un même code d'identification ne sont considérés comme ayant été émis par le terminal associé audit code d'identification que si un critère prédéfini d'authentification est vérifié par l'ensemble des écarts de sauts de fréquence considérés pour l'authentification.

En d'autres termes, le diagnostic de validité des paquets peut être retardé jusqu'à ce qu'un critère de validation d'ensemble soit rempli, ce critère statistique validant à posteriori l'ensemble des paquets en attente de validation. Dans ces conditions, le système se trouve parfois en attente d'une validation d'un sous ensemble de paquets.

Dans un mode particulier de mise en oeuvre, le critère d'authentification est vérifié si le cumul des écarts de sauts de fréquence considérés pour l'authentification est inférieur à une valeur seuil prédéfinie.

Avantageusement, la vérification du critère d'authentification peut également être basée sur l'espérance, la variance ou toute autre propriété statistique sur les écarts de sauts de fréquence considérés pour l'authentification.

Dans un mode particulier de mise en oeuvre, le système récepteur peut comprendre un serveur fédérateur (communément appelé « backbone » dans le contexte de l'invention) coopérant avec une ou plusieurs station(s). Dans ce cas, les opérations du procédé d'authentification sont de préférence réparties entre le serveur et la ou les station(s).

De préférence, la station réalise les mesures de bande fréquentielle des paquets de données qu'il reçoit, et le serveur collecte l'ensemble des paquets de données reçus par chaque station et les bandes fréquentielles mesurées par chaque stations, et réalise au moins les opérations restantes du procédé d'authentification présenté ci-avant.

Selon un second aspect, l'invention concerne un produit programme d'ordinateur comportant un ensemble d'instructions de code de programme qui, lorsqu'elles sont exécutées par un processeur, mettent en oeuvre un procédé d'authentification selon l'invention.

Selon un troisième aspect, la présente invention concerne un système récepteur comprenant au moins une station d'un système de télécommunications numérique, adapté à recevoir des paquets de données émis par des terminaux, chaque paquet de données incorporant un code d'identification du terminal ayant émis ledit paquet de données, chaque terminal émettant successivement des paquets de données dans une pluralité de bandes fréquentielles différentes selon une séquence de sauts de fréquence prédéfinie spécifique dudit terminal. Ce système récepteur comprend en outre des moyens configurés pour authentifier les paquets de données reçus conformément à un procédé selon l'invention.

Dans une implémentation alternative autorisant un déploiement évolutif (ou scalable), le système récepteur peut comprendre des stations aptes à recevoir les paquets émis par les terminaux et un serveur de fédération (ou backbone). Chaque station comprend de préférence des moyens de communication avec le serveur et des moyens pour réaliser une partie du procédé d'authentification selon l'invention. Le serveur comprend de préférence des moyens pour réaliser l'autre partie du procédé d'authentification des paquets de données reçus conformément à l'invention.

Selon un quatrième aspect, la présente invention concerne un système de télécommunication comprenant :

- des terminaux, chaque terminal étant apte à émettre successivement des paquets de données dans une pluralité de bandes fréquentielles différentes selon une séquence de sauts de fréquence prédéfinie spécifique dudit terminal, chaque paquet de données incorporant un code d'identification du terminal (10) ayant émis ledit paquet de données,
- des stations coopérant avec un serveur fédérateur pour réaliser le procédé d'authentification conformément à l'invention,

  - chaque station étant apte à réaliser les mesures de bande fréquentielle des paquets de données qu'il reçoit ; et
  - le serveur étant apte à collecter l'ensemble des paquets de données reçus par chaque station et les bandes fréquentielles mesurées par chaque stations, et étant apte à réaliser au moins les opérations restantes du procédé d'authentification selon l'invention qui ne sont pas réalisés par la station.

**Présentation des figures**

L'invention sera mieux comprise à la lecture de la description suivante, donnée à titre d'exemple nullement limitatif, et faite en se référant aux figures qui représentent :

- Figure 1 : une représentation schématique d'un système de télécommunications numériques, et
- Figure 2 : un diagramme illustrant les étapes d'un exemple de mise en oeuvre d'un procédé d'authentification selon l'invention.

## Exposé détaillé d'un mode de réalisation particulier

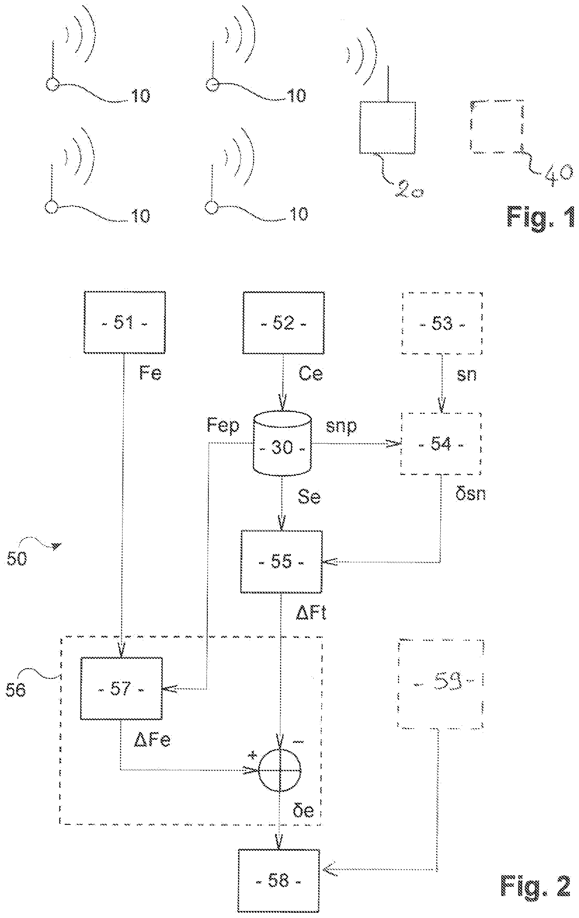

La figure 1 représente, de façon très schématique, un système de télécommunications comprenant un ou plusieurs émetteurs tels que des terminaux **10** et une ou plusieurs stations **20** (une seule station a été représentée sur la figure 1 pour des raisons de clarté). Dans le contexte de l'invention, on entend de manière générale par « station » tout dispositif adapté à recevoir des paquets de données sous la forme de signaux radioélectriques. La station **20** est par exemple un dispositif particulier tel qu'un point d'accès à un réseau filaire ou non filaire de télécommunications.

On entend par « signal radioélectrique » une onde électromagnétique se propageant via des moyens non filaires, dont les fréquences sont comprises dans le spectre traditionnel des ondes radioélectriques (quelques hertz à plusieurs centaines de gigahertz) ou dans des bandes de fréquences voisines.

Il est à noter qu'on considère principalement le cas d'une émission de paquets de données par des terminaux **10** vers la station **20**. L'émission éventuelle de paquets de données par la station **20** vers les terminaux **10** sort du cadre de l'invention.

Les terminaux **10** émettent des paquets de données à destination de la station **20** dans une ressource fréquentielle partagée, dite « macrocanal » (ou bande de multiplexage des signaux correspondant à la bande de réception de la station) dans le jargon des réseaux de télécommunication, de largeur spectrale ΔM.

Les paquets de données sont émis par les terminaux **10** dans des bandes fréquentielles de largeur spectrale ΔB prédéfinie inférieure à ΔM. De préférence, la largeur spectrale ΔM du macrocanal est significativement supérieure à la largeur spectrale ΔB, afin de pouvoir multiplexer un grand nombre de terminaux **10**. Par exemple, la largeur spectrale ΔM est au moins cent fois supérieure à la largeur spectrale ΔB.

Chaque terminal **10** émet des paquets de données de manière récurrente à destination de la station **20**. Des paquets de données émis successivement par un même terminal **10** sont émis dans des bandes fréquentielles différentes selon une séquence de sauts de fréquence prédéfinie spécifique dudit terminal **10**. En outre, chaque paquet de données incorpore un code d'identification du terminal **10** ayant émis ledit paquet de données.

Dans une variante, un serveur fédérateur **40**, communément appelé « backbone » dans le contexte des réseaux de télécommunication, peut être associé à ces stations **20** comme illustré sur la figure 3.

De ce fait, par la suite, le terme « émetteur » se rapportera à un terminal **10**, et le terme « système récepteur » se rapportera indifféremment à une station ou à un ensemble formé d'au moins une station en coopération avec un serveur fédérateur (backbone).

En outre, dans la description suivante, les terminaux sont désignés par la même référence **10**. Lorsqu'il est nécessaire de distinguer un terminal d'un autre terminal, la référence correspondante est accompagnée d'un indice alphabétique spécifique au terminal considéré. Par exemple, un terminal quelconque considéré de manière générale sera désigné par **10**, tandis que les terminaux **10a**, **10b**, **10c**, etc. correspondront à des terminaux particuliers.

Suivant un exemple non limitatif, un terminal **10a** est configuré pour émettre dans des bandes fréquentielles successives définies par une bande fréquentielle de base Fa et une séquence Sa comportant $(N-1)$ sauts de fréquence successifs Sa = $\{\Delta Fa_1, \Delta Fa_2,..., \Delta Fa_{N-1}\}$. Ainsi, le terminal **10a** émet d'abord un paquet de données dans la bande fréquentielle Fa, puis dans la bande fréquentielle $(Fa+\Delta Fa_1)$, puis dans la bande fréquentielle $(Fa+\Delta Fa_1+\Delta Fa_2)$, etc. L'ensemble des sauts de fréquence de la séquence Sa est par exemple choisi tel que :

$$\sum_{n=1}^{N-1} \Delta Fa_n = 0$$

de sorte que, après avoir appliqué l'ensemble des sauts de fréquence de la séquence Sa, le terminal **10a** émet à nouveau, théoriquement, dans la bande fréquentielle de base Fa.

De manière analogue, un terminal **10b** se voit associer une bande fréquentielle de base Fb et une séquence Sb spécifique de $(M-1)$ sauts de fréquence successifs Sb = $\{\Delta Fb_1, \Delta Fb_2, ..., \Delta Fb_{M-1}\}$, un terminal 10c se voit associer une bande fréquentielle de base Fc et une séquence Sc spécifique de $(P-1)$ sauts de fréquence successifs Sc = $\{\Delta Fc_1, \Delta Fc_2, ..., \Delta Fc_{P-1}\}$, etc.

Les longueurs M, N, P, et de façon générale toute longueur de séquence peut être choisie indépendamment et arbitrairement. En particulier, elles peuvent être choisies arbitrairement grandes, de façon à ce que la séquence ne présente pas ce cycle répétitif apparent.

La séquence de sauts de fréquence de chaque terminal **10** (c'est à dire la séquence Sa du terminal **10a**, la séquence Sb du terminal **10b**, la séquence Sc du terminal **10c**, etc.) peut être obtenue soit la station **20**, soit par le serveur **40** (backbone). Par exemple, la station **20** peut comprendre une mémoire électronique **30** dans laquelle est mémorisée une table de correspondance associant, à chaque code d'identification possible, la séquence de sauts de fréquence correspondante. Bien entendu, cette table de correspondance peut être mémorisée dans le serveur **40**.

Une implémentation préférentielle est celle où chaque station **20** effectue la réception et la mesure de la bande fréquentielle, et le serveur **40** collecte l'ensemble des paquets et les mesures fréquentielles mesurées par la ou les stations **20**, et effectue l'opération d'authentification en utilisant l'ensemble des résultats de manière comparative pour consolider et fiabiliser le diagnostic.

Dans l'exemple ci-dessus, les séquences de sauts de fréquence sont cycliques, de façon apparente ou non. Rien n'exclut, suivant d'autres exemples, d'avoir des séquences de sauts de fréquences non cycliques, par exemple générées au moyen d'un registre à décalage à rétroaction linéaire, ou LFSR (acronyme de l'anglais « Linear Feedback Shift Register »), dont le ou les polynômes générateurs prédéfinis peuvent être obtenus par la station **20**.

Dans la suite de la description, on se place de manière non limitative dans un système de télécommunications numériques tel que décrit dans la demande internationale WO 2011/154466, dans lesquels les paquets de données sont à bande étroite (largeur spectrale $\Delta B$ de l'ordre de quelques hertz à quelques centaines de hertz) et la dérive en fréquence des moyens de synthèse fréquentielle des terminaux est supérieure à la largeur spectrale $\Delta B$.

Par conséquent, le terminal **10a**, lorsqu'il émet théoriquement dans la bande fréquentielle de base Fa, émet en pratique dans une bande fréquentielle F'a qui peut être séparée de la bande fréquentielle de base Fa d'une largeur spectrale supérieure à $\Delta B$. De manière analogue, les sauts de fréquence $\{\Delta F'a_1, \Delta F'a_2, ..., \Delta F'a_{N-1}\}$ pourront différer des sauts de fréquence $\{\Delta Fa_1, \Delta Fa_2, ..., \Delta Fa_{N-1}\}$. Cependant, l'erreur entachant le saut de fréquence est bien moindre que celle entachant la bande fréquentielle. En effet, dans un système non syntonisé dans lequel la station réalisant les mesures de bande fréquentielle présente une précision en fréquence de 10ppm par exemple, non corrigé ni compensé par un mécanisme de synchronisation, l'erreur de fréquence induite pour la bande fréquentielle de base Fa autour de 1GHz est de 10kHz, alors que l'erreur de fréquence sur un saut de 10kHz n'est que de 0.1Hz. Par conséquent, la valeur du saut de fréquence est parfaitement discriminante, alors que la fréquence Fa elle-même ne l'est pas.

On comprend donc qu'un avantage du procédé d'authentification de la présente invention réside dans le fait que, ni la station **20** ni le serveur **40** (backbone), bien qu'ils aient accès aux séquences de sauts de fréquence de chaque terminal **10,** ne savent ni n'ont besoin de discriminer directement dans quelle bande fréquentielle un terminal **10** a émis un paquet à des fins d'authentification. Ce procédé d'authentification diffère fondamentalement des procédés déterministes tels que décrit dans le document US2001/0004375, qui se base sur la mesure et la discrimination de fréquence afin d'authentifier les paquets.

Dans un mode particulier de réalisation, la station **20** comporte un module de réception analogique et un module de réception numérique.

Le module de réception analogique est adapté à recevoir un signal global correspondant à l'ensemble des signaux radioélectriques reçus dans le macrocanal. Il comporte à cet effet un ensemble de moyens, considérés comme connus de l'homme de l'art (antennes, filtres analogiques, amplificateurs, oscillateurs locaux, mélangeurs, etc.), adaptés à translater fréquentiellement le signal global.

Le module de réception analogique présente en sortie un signal analogique correspondant au signal global ramené autour d'une fréquence intermédiaire inférieure à la fréquence centrale de la bande de multiplexage, pouvant être nulle.

Le module de réception numérique comporte, de manière conventionnelle, un ou plusieurs convertisseurs analogique/numérique (A/N) adaptés à échantillonner le ou les signaux analogiques fournis par le module de réception analogique de sorte à obtenir un signal numérique.

Le module de réception numérique comporte en outre une unité de traitement du signal numérique en sortie des convertisseurs A/N. L'unité de traitement effectue, à partir du signal numérique, une détection de paquets de données émis par des terminaux **10** et présents dans le signal global. L'unité de traitement exécute également les étapes d'un procédé **50** d'authentification des paquets de données détectés, décrit plus en détail ci-après.

Dans une variante préférentielle, le procédé d'authentification **50** peut être réparti entre une unité de calcul allouée par le serveur **40** et une unité de calcul de la station **20**.

L'unité de traitement comporte par exemple un processeur et une mémoire électronique dans laquelle est mémorisé un produit programme d'ordinateur, sous la forme d'un ensemble d'instructions de code de programme qui, lorsqu'elles sont exécutées par le processeur, mettent en oeuvre tout ou partie des étapes d'un procédé 50 d'authentification. Dans une variante, l'unité de traitement comporte des circuits logiques programmables, de type FPGA, PLD, etc., et/ou circuits intégrés spécialisés (ASIC), adaptés à mettre en oeuvre tout ou partie des étapes dudit procédé 50 d'authentification.

La figure 2 représente un mode préféré de mise en oeuvre d'un procédé **50** d'authentification des paquets de données reçus par la station **20**.

Le procédé **50** d'authentification comporte des étapes qui sont exécutées par le système récepteur pour chaque paquet de données reçu, dont les principales sont :

- **51** mesure de la bande fréquentielle dans laquelle le paquet de données considéré a été reçu,
- **52** extraction du code d'identification à partir dudit paquet de données considéré,
- **55** détermination d'un saut de fréquence théorique en fonction de la séquence de sauts de fréquence associée audit code d'identification extrait du paquet de données considéré,
- **56** calcul d'un écart de saut de fréquence en fonction du saut de fréquence théorique, de la bande fréquentielle mesurée pour le paquet de données considéré et de la bande fréquentielle mesurée pour le précédent paquet de données reçu incorporant le même code d'identification que ledit paquet de données considéré.

Au cours de l'étape **51** de mesure, la station **20** mesure la bande fréquentielle du paquet de données considéré, désignée ci-après par « Fe » puis extrait le code d'identification au cours de l'étape **52** d'extraction, ci-après désigné par « Ce ».

Pour la description du mode de mise en oeuvre illustré par la figure 2, on se place de manière non limitative dans le cas où le code d'identification Ce extrait du paquet de données considéré correspond au code d'identification associé au terminal **10a.**

A partir du code d'identification Ce, l'unité de calcul, situé soit dans la station **20** soit dans le serveur **40** (backbone), obtient la séquence de sauts de fréquence associée audit code d'identification Ce, préalablement mémorisée dans la mémoire électronique **30,** et obtient la séquence Sa de sauts de fréquence associée au terminal **10a.**

L'unité de calcul obtient également des informations relatives au précédent paquet de données reçu avec le code d'identification Ce, c'est-à-dire dans le cas présent reçu du terminal **10a.** Ces informations ont été préalablement mémorisées dans la base de données du réseau, suite à l'exécution des étapes du procédé **50** d'authentification pour un précédent paquet de données reçu du terminal **10a.**

Notamment, l'unité de calcul obtient la bande fréquentielle mesurée pour le précédent paquet de données au cours de l'étape **51** de mesure et mémorisée dans la mémoire électronique **30,** désignée ci-après par « Fep ».

Dans le mode particulier de mise en oeuvre illustré par la figure 2, on se place de manière non limitative dans le cas où chaque terminal **10** incorpore dans un paquet de données émis un compteur qui est incrémenté à chaque nouvelle émission par ledit terminal. Par exemple, lorsque le terminal **10a** émet un paquet de données dans la bande fréquentielle de base Fa, le compteur est égal à 0, lorsqu'il émet le paquet de données suivant (dans la bande fréquentielle Fa+$\Delta$F1a), le compteur est égal à 1, etc. Dans ce cas, le procédé **50** d'authentification peut comporter une étape **53** d'extraction du compteur du paquet de données considéré, désigné ci-après par « sn ».

Dans ce cas, les informations, obtenues par la station **20** à partir du code d'identification Ce dans la mémoire électronique **30,** comprennent également le compteur du précédent paquet de données reçu avec le code d'identification Ce, désigné ci-après par « snp ».

Dans le mode particulier de mise en oeuvre illustré par la figure 2, le procédé **50** d'authentification comporte en outre une étape **54** d'estimation du nombre de paquets perdus, désigné ci-après par « δsn ». Les paquets de données perdus correspondent, dans le cas présent, à des paquets de données qui ont été émis par le terminal **10a** depuis que le précédent paquet de données reçu du terminal **10a** a été reçu, mais qui n'ont pas été reçus par la station **20**.

Le nombre δsn de paquet de données perdus peut être estimé en fonction du compteur sn extrait du paquet de données considéré et du compteur snp extrait du précédent paquet de données reçu avec le même code d'identification Ce. Par exemple, si le compteur sn est égal à n (modulo N) et si le compteur snp est égal à (n-d) (modulo N, d ≥ 1), alors le nombre δsn de paquets perdus est égal à (d-1) et peut être égal à zéro.

Au cours de l'étape **55,** la station **20** calcule un saut de fréquence théorique, désigné ci-après par « $\Delta$Ft », en fonction de la séquence Sa de sauts de fréquence obtenue à partir du code d'identification Ce extrait du paquet de données considéré. Le saut de fréquence théorique $\Delta$Ft correspond au saut de fréquence théoriquement appliqué depuis l'émission du précédent paquet de données reçu avec le même code d'identification Ce.

Le saut de fréquence théorique $\Delta$Ft, dans l'exemple illustré par la figure 2, est également calculé en fonction des compteurs sn (égal à n) et snp (égal à (n-d)). Dans le cas considéré de paquets de données reçus du terminal **10a**, le saut de fréquence théorique $\Delta$Ft est par exemple calculé selon l'expression suivante :

$$\Delta Ft = \sum_{k=sn-\delta sn}^{sn} \Delta Fa_k$$

Par exemple, si sn = 4 et (sn-δsn) = 4 (c'est-à-dire qu'aucun paquet de données n'a été perdu) le saut de fréquence théorique $\Delta$Ft est égal à $\Delta Fa_4$. Si sn = 4 et (sn-δsn) = 3 (c'est-à-dire qu'un paquet de données a été perdu) le saut de fréquence théorique $\Delta$Ft est égal à ($\Delta Fa_3$+$\Delta Fa_4$), etc.

Au cours de l'étape **56,** la station **20** calcule un écart de saut de fréquence, désigné ci-après par « δe ».

Dans le mode particulier de mise en oeuvre illustré par la figure 2, le procédé **50** d'authentification comporte une étape **57** de calcul d'un saut de fréquence réel, désigné ci-après par « $\Delta$Fe ». Le saut de fréquence réel $\Delta$Fe est calculé en fonction de la bande fréquentielle mesurée Fe et de la bande fréquentielle mesurée Fep, par exemple selon l'expression $\Delta$Fe = Fe - Fep. Dans ce cas, l'écart de saut de fréquence δe est calculé comme étant une distance entre le saut de fréquence théorique $\Delta$Ft et le saut de fréquence réel $\Delta$Fe, par exemple selon l'expression δe = $\Delta$Fe - $\Delta$Ft.

Rien n'exclut, suivant d'autres exemples, de calculer différemment l'écart de saut de fréquence δe. Dans une variante non illustrée par des figures, le procédé **50** d'authentification comporte une étape de calcul d'une bande fréquentielle théorique dans laquelle le paquet de données considéré aurait dû être reçu, désignée ci-après par « Ft ». La bande fréquentielle théorique Ft est calculée en fonction du saut de fréquence théorique $\Delta$Ft et de la bande fréquentielle mesurée Fep, par exemple selon l'expression Ft = Fep + $\Delta$Ft. Dans ce cas, l'écart de saut de fréquence δe est calculé comme étant une distance entre la bande fréquentielle mesurée Fe et la bande fréquentielle théorique Ft, par exemple selon l'expression $\delta e = Fe - Ft$.

De préférence, en particulier lorsque la dérive fréquentielle des moyens de synthèse fréquentielle des terminaux **10** est importante, la bande fréquentielle du paquet de données considéré est mesurée plusieurs fois au cours dudit paquet de données considéré. Par exemple, au cours de l'étape **51** de mesure, la bande fréquentielle est mesurée L fois, de sorte à obtenir des bandes fréquentielles mesurées respectivement $Fe_1$ (première mesure), $Fe_2$, ..., $Fe_L$ (dernière mesure). De même, pour le précédent paquet de données, plusieurs mesures sont effectuées de sorte à obtenir des bandes fréquentielles mesurées respectivement $Fep_1$ (première mesure), $Fep_2$, ..., $Fep_L$ (dernière mesure). Dans ce cas, l'écart de saut de fréquence $\delta e$ est avantageusement calculé en considérant la bande fréquentielle mesurée $Fe_L$ du paquet de données considéré et la bande fréquentielle mesurée $Fep_L$ du précédent paquet de données incorporant le même code d'identification que ledit paquet de données considéré. Dans le cas illustré par la figure 2, cela revient à calculer le saut de fréquence réel $\Delta Fe$ selon l'expression $\Delta Fe = Fe_L - Fep_L$.

Rien n'exclut cependant, lorsque la bande fréquentielle du paquet de données considéré est mesurée plusieurs fois au cours d'un même paquet de données, de considérer suivant d'autres exemples des moments équivalents du paquet de données considéré et du précédent paquet de données. Par exemple, le saut de fréquence réel $\Delta Fe$ peut être calculé en considérant les premières mesures (selon l'expression $\Delta Fe = Fe_1 - Fep_1$) ou une autre mesure quelconque (selon l'expression $\Delta Fe = Fe_i - Fep_i$).

Lorsque la dérive fréquentielle des moyens de synthèse fréquentielle des terminaux **10** est importante, il est possible d'identifier le terminal à partir de la signature de sa dérive fréquentielle à l'allumage. En effet, de façon connue de l'homme de l'art, le comportement de dérive en fréquence à l'allumage d'un dispositif électronique synthétisant une fréquence radioélectrique présente un motif unique qui dépend de l'assemblage unique des composants électroniques qui le composent. À partir de l'ensemble des mesures $Fe_i$, on peut reconstituer ce motif unique, par une opération mathématique, une interpolation par exemple, et le comparer au motif de dérive théorique stocké en base de donnée pour ce dispositif.

Le procédé **50** d'authentification comporte en outre une étape **58** de détermination si les paquets de données reçus successivement avec un même code d'identification ont été émis par le terminal **10** associé audit code d'identification en fonction d'au moins un écart de saut de fréquence $\delta e$ calculé pour l'un desdits paquets de données.

De préférence, plusieurs écarts de saut de fréquence, calculés pour différents paquets de données reçus avec un même code d'identification, sont considérés au cours de l'étape **58** de détermination, afin d'améliorer la robustesse de l'authentification. Dans la suite de la description, on se place dans le cas où M écarts de saut de fréquence (respectivement $\delta e_1$, $\delta e_2$, ..., $\delta e_M$) sont considérés au cours de l'étape **58** de détermination.

Dans un mode particulier de mise en oeuvre de l'étape **58** de détermination, les paquets de données reçus successivement avec le même code d'identification ne sont considérés comme ayant été émis par le terminal **10** associé audit code d'identification que si chaque écart de saut de fréquence $\delta e_1$, $\delta e_2$, ..., $\delta e_M$ est de valeur absolue inférieure à une valeur seuil. La valeur seuil est par exemple prédéfinie en fonction des dérives fréquentielles maximales constatées en fonction des conditions environnementales (température) pour les moyens de synthèse fréquentielle des terminaux **10**.

A titre d'exemple numérique, on reprend l'exemple cité plus haut, c'est-à-dire que l'on considère un système non syntonisé dans lequel :

- la station réceptrice présente une précision fréquentielle initiale de 10ppm (« parts per million »), non compensé par un mécanisme de synchronisation, l'erreur de fréquence induite pour Fa=1GHz est de 10kHz,
- le terminal émet des paquets d'occupation spectrale $\Delta B$=100Hz, et
- la variation en température est typiquement de 10ppm sur la plage autorisée, ou O.lppm par degré.

Dans ce cas de figure, d'un paquet à l'autre, une variation typique de 10°C des conditions de température autour de la température de travail va induire entre deux paquets un écart de saut de 0.1Hz + 1kHz. La valeur de seuil à appliquer dans ce cas est autour de 1kHz. Dans des conditions particulières d'implémentation, une variation extrême des conditions de température va induire entre deux paquets un écart de saut de 0.1Hz + 10kHz. L'écart de saut n'est donc plus discriminant en soi, il est donc préférable d'adapter le système d'authentification et d'appliquer une analyse globale sur un grand ensemble de paquets reçus successivement par le réseau. Dans ce cas, l'analyse peut se faire sur le comportement statistique de l'ensemble des paquets reçus, en particulier sur l'ensemble des écarts de saut, dont l'espérance et la variance lorsqu'ils présentent des valeurs statistiques réalistes, vont valider l'ensemble des paquets reçus jusqu'à la réalisation du critère statistique. Par contre, si un écart ou si une série d'écarts de saut de fréquence $\delta e_1$, $\delta e_2$, ..., $\delta e_M$ est trop important, les paquets de données reçus successivement avec le même code d'identification ne seront pas considérés comme ayant été émis par le terminal **10** associé audit code d'identification et l'authentification échouera.

Dans un autre mode particulier de mise en oeuvre de l'étape **58** de détermination, pouvant être combiné avec le précédent, les paquets de données reçus successivement avec le même code d'identification ne sont considérés comme ayant été émis par le terminal

10 associé audit code d'identification que si un critère prédéfini d'authentification est vérifié par l'ensemble desdits écarts de sauts de fréquence $\delta e_1$, $\delta e_2$, ..., $\delta e_M$ considérés pour l'authentification.

Par exemple, le critère d'authentification est vérifié si le cumul (somme en valeur absolue ou relative) des écarts de sauts de fréquence $\delta e_1$, $\delta e_2$, ..., $\delta e_M$ considérés pour l'authentification est inférieur à une valeur seuil prédéfinie.

En plus des opérations décrites précédemment, il est également possible de mettre en oeuvre, de façon indépendante, une étape **59** prenant en compte le motif de dérive fréquentielle de l'oscillateur ayant servi à générer le paquet de données considéré, de manière à renforcer le procédé d'authentification. Cette étape **59** peut notamment comprendre :

- la mesure du motif de dérive fréquentielle de l'oscillateur ayant servi à générer le paquet de données considéré, puis
- la comparaison de ce motif de dérive fréquentielle mesuré avec un motif de dérive fréquentielle prédéfini associé audit code d'identification extrait dudit paquet de données considéré.

De manière plus générale, il est à noter que les modes de mise en oeuvre considérés ci-dessus ont été décrits à titre d'exemples non limitatifs, et que des variantes sont par conséquent envisageables.

Notamment, il est à noter que le procédé **50** d'authentification peut être considéré seul ou combiné avec d'autres procédés d'authentification, afin de renforcer la robustesse de l'authentification. Par exemple, les paquets de données peuvent comporter une partie chiffrée au moyen d'une clé tournante (« rolling code » dans la littérature anglo-saxonne). Une authentification conventionnelle basée sur l'utilisation de clés tournantes peut être combinée à une authentification basée sur la vérification, conformément à l'invention, de la séquence de sauts de fréquence.

En outre, il a été décrit ci-avant une estimation du nombre de paquets perdus en fonction d'un compteur incorporé dans les paquets de données.

Rien n'exclut, suivant d'autres exemples, d'estimer autrement le nombre de paquets perdus. Suivant un exemple non limitatif, si une partie des paquets de données est chiffrée avec une clé tournante incrémentée par le terminal à chaque nouvelle émission, la station **20** peut incrémenter la clé tournante qu'elle utilise pour essayer de déchiffrer le paquet de données considéré jusqu'à obtenir une clé tournante permettant de déchiffrer avec succès ledit paquet de données considéré. Le nombre de paquets perdus est alors estimé en fonction de la clé tournante permettant de déchiffrer le paquet de données considéré et en fonction de la clé tournante qui a permis de déchiffrer le précédent paquet de données reçu incorporant le même code d'identification que ledit paquet de données considéré.

**Revendications**

1. Procédé (50) d'authentification de paquets de données émis par des terminaux (10) et reçus par un système récepteur (20) comprenant au moins une station, chaque paquet de données incorporant un code d'identification du terminal (10) ayant émis ledit paquet de données, chaque terminal (10) émettant successivement des paquets de données dans une pluralité de bandes fréquentielles différentes selon une séquence de sauts de fréquence prédéfinie spécifique dudit terminal,
   ***caractérisé* en ce qu'**il comprend, pour chaque paquet de données reçu par ledit système récepteur (20) :

   - (51) la mesure, par ladite station, de la bande fréquentielle dans laquelle le paquet de données considéré a été reçu,
   - (52) l'extraction du code d'identification contenu dans ledit paquet de données considéré,

     - le calcul d'un saut de fréquence, à partir de ladite bande fréquentielle mesurée du paquet considéré et d'une bande fréquentielle mesurée par le système récepteur pour un précédent paquet de données reçu incorporant ledit code d'identification extrait,

     - (55) la détermination, en fonction de la séquence de sauts de fréquence prédéterminée associée audit code d'identification extrait du paquet de données considéré, d'un saut de fréquence théorique appliqué depuis ledit précédent paquet de données reçu,
     - (56) le calcul d'un écart de saut de fréquence en fonction dudit saut de fréquence théorique et dudit saut de fréquence calculé,

   ***et en ce que*** le procédé (50) d'authentification comprend en outre une étape (58) de détermination si les paquets de données reçus successivement avec un même code d'identification ont été émis par le terminal (10) associé audit code d'identification en fonction d'au moins un écart de saut de fréquence calculé pour l'un desdits paquets de données.

2. Procédé (50) selon la revendication 1, **caractérisé en ce que** la bande fréquentielle d'un paquet de données est mesurée plusieurs fois au cours dudit paquet de données considéré, l'écart de saut de fréquence étant calculé en considérant la bande fréquentielle mesurée finale du paquet de données considéré et la bande fréquentielle mesurée finale du précédent paquet de données incorporant le même code d'identification que ledit paquet de données considéré.

**3.** Procédé (50) selon l'une des revendications précédentes, **caractérisé en ce qu'**il comporte, après l'étape (52) d'extraction du code d'identification à partir du paquet de données considéré, une étape (54) d'estimation d'un nombre de paquets de données perdus, lesdits paquets de données perdus correspondant à des paquets de données qui ont été émis par le terminal (10) associé audit code d'identification depuis que le précédent paquet de données incorporant ledit code d'identification a été reçu, mais qui n'ont pas été reçus par le système récepteur (20), le saut de fréquence théorique pour le paquet de données considéré étant déterminé en fonction du nombre de paquets de données perdus et de la séquence de sauts de fréquence associée audit code d'identification.

**4.** Procédé (50) selon la revendication 3, **caractérisé en ce que** les paquets de données incorporant un compteur incrémenté par le terminal (10) à chaque nouvelle émission, le nombre de paquets perdus est estimé en fonction du compteur du paquet de données considéré et du compteur du précédent paquet de données reçu incorporant le même code d'identification que ledit paquet de données considéré.

**5.** Procédé (50) selon la revendication 3, **caractérisé en ce que** les paquets de données comportant une partie chiffrée au moyen d'une clé tournante incrémentée par le terminal (10) à chaque nouvelle émission, le nombre de paquets perdus est estimé en fonction de la clé tournante utilisée pour le paquet de données considéré et de la clé tournante utilisée pour le précédent paquet de données reçu incorporant le même code d'identification que ledit paquet de données considéré.

**6.** Procédé (50) selon la revendication 3, **caractérisé en ce que** les paquets de données étant émis par un terminal (10) avec une période prédéfinie, le nombre de paquets perdus est estimé en fonction de ladite période et d'un écart temporel entre la réception du paquet de données considéré et la réception du précédent paquet de données incorporant le même code d'identification que ledit paquet de données considéré.

**7.** Procédé (50) selon l'une des revendications précédentes, **caractérisé en ce que** les paquets de données reçus successivement avec un même code d'identification ne sont considérés comme ayant été émis par le terminal (10) associé audit code d'identification que si chaque écart de saut de fréquence considéré pour l'authentification est de valeur absolue inférieure à une valeur seuil.

**8.** Procédé (50) selon la revendication 7, **caractérisé en ce que** la valeur seuil à utiliser pour le paquet de données considéré est déterminée en fonction d'un écart temporel entre la réception dudit paquet de données considéré et la réception du précédent paquet de données incorporant le même code d'identification que ledit paquet de données considéré.

**9.** Procédé (50) selon l'une des revendications précédentes, **caractérisé en ce que** plusieurs écarts de saut de fréquence étant considérés pour l'authentification, les paquets de données reçus successivement avec un même code d'identification ne sont considérés comme ayant été émis par le terminal (10) associé audit code d'identification que si un critère prédéfini d'authentification est vérifié par l'ensemble desdits écarts de sauts de fréquence considérés pour l'authentification.

**10.** Procédé (50) selon la revendication 9, **caractérisé en ce que** le critère d'authentification est vérifié si le cumul des écarts de sauts de fréquence considérés pour l'authentification est inférieur à une valeur seuil prédéfinie.

**11.** Procédé (50) selon l'une des revendications précédentes, **caractérisé en ce qu'**il comprend en outre, pour chaque paquet de données reçu par ledit système récepteur :

- la mesure, par ce système récepteur, d'un motif de dérive fréquentielle d'un oscillateur ayant servi à générer le paquet de données considéré, et
- la comparaison du motif de dérive fréquentielle mesuré avec un motif de dérive fréquentielle prédéfini associé audit code d'identification extrait dudit paquet de données considéré.

**12.** Procédé (50) selon l'une des revendications précédentes, **caractérisé en ce que** le système récepteur comprend un serveur fédérateur coopérant avec au moins une station, et **en ce que** les opérations du procédé d'authentification sont réparties entre ladite station et ledit serveur.

**13.** Procédé (50) selon la revendication 12, **caractérisé en ce que** :

- la station réalise les mesures de bande fréquentielle des paquets de données qu'il reçoit ; et
- le serveur collecte l'ensemble des paquets de données reçus par chaque station et les bandes fréquentielles mesurées par chaque stations, et réalise au moins les opérations restantes du procédé d'authentification.

**14.** Produit programme d'ordinateur, **caractérisé en ce qu'**il comporte un ensemble d'instructions de code de programme qui, lorsqu'elles sont exécutées par un processeur, mettent en oeuvre un procédé (50) d'authentification selon l'une des revendications précédentes.

**15.** Système récepteur d'un système de télécommunications numérique, adapté à recevoir des paquets de données émis par des terminaux (10), ledit système récepteur comprenant au moins une station, chaque paquet de données incorporant un code d'identification du terminal (10) ayant émis ledit paquet de données, chaque terminal (10) émettant successivement des paquets de données dans une pluralité de bandes fréquentielles différentes selon une séquence de sauts de fréquence prédéfinie spécifique dudit terminal, **caractérisée en ce qu'**il comprend des moyens configurés pour authentifier les paquets de données reçus conformément à un procédé selon l'une des revendications 1 à 13.

**16.** Système de télécommunication comprenant :

- des terminaux, chaque terminal étant apte à émettre successivement des paquets de données dans une pluralité de bandes fréquentielles différentes selon une séquence de sauts de fréquence prédéfinie spécifique dudit terminal, chaque paquet de données incorporant un code d'identification du terminal (10) ayant émis ledit paquet de données,
- des stations coopérant avec un serveur fédérateur pour réaliser le procédé d'authentification selon l'une des revendications 1 à 13,

- chaque station étant apte à réaliser les mesures de bande fréquentielle des paquets de données qu'il reçoit ; et
- le serveur étant apte à collecter l'ensemble des paquets de données reçus par chaque station et les bandes fréquentielles mesurées par chaque stations, et étant apte à réaliser au moins les opérations restantes dudit procédé d'authentification.

**Patentansprüche**

**1.** Verfahren (50) zur Authentifizierung von Datenpaketen, die von Endgeräten (10) gesandt und von einem Empfangssystem (20) empfangen werden, umfassend mindestens eine Station, wobei jedes Datenpaket einen Identifikationscode des Endgeräts (10), das das Datenpaket gesandt hat, einschließt, wobei jedes Endgerät (10) nacheinander Datenpakete in einer Vielzahl von unterschiedlichen Frequenzbändern nach einer spezifischen vordefinierten Sequenz von Frequenzsprüngen des Endgeräts sendet,

**dadurch gekennzeichnet, dass** es für jedes von dem Empfangssystem (20) empfangene Datenpaket umfasst:

- (51) durch die Station das Messen des Frequenzbandes, in dem das betreffende Datenpaket empfangen wurde,
- (52) die Entnahme des in dem betreffenden Datenpaket enthaltenen Identifikationscodes,
- die Berechnung eines Frequenzsprungs aus dem gemessenen Frequenzband des betreffenden Pakets und einem Frequenzband, das von dem Empfangssystem für ein vorhergehendes empfangenes Datenpaket, das den entnommenen Identifikationscode einschließt, gemessenen wurde,
- (55) in Abhängigkeit von der vorbestimmten Sequenz von Frequenzsprüngen, die dem aus dem betreffenden Datenpaket entnommenen Identifikationscode zugeordnet ist, die Bestimmung eines theoretischen Frequenzsprungs, der seit dem vorhergehenden empfangenen Datenpaket angewandt wird,
- (56) die Berechnung einer Frequenzsprungabweichung in Abhängigkeit vom theoretischen Frequenzsprung und vom berechneten Frequenzsprung,

und dass das Authentifizierungsverfahren (50) ferner einen Schritt (58) der Bestimmung umfasst, ob die nacheinander mit einem selben Identifizierungscode empfangenen Datenpakete von dem dem Identifikationscode zugeordneten Endgerät (10) in Abhängigkeit von mindestens einer berechneten Frequenzabweichung für eines der Datenpakete gesandt wurden.

**2.** Verfahren (50) nach Anspruch 1, **dadurch gekennzeichnet, dass** das Frequenzband eines Datenpakets mehrmals während des betreffenden Datenpakets gemessen wird, wobei die Frequenzsprungabweichung berechnet wird unter Betrachtung des endgültigen gemessenen Frequenzbandes des betreffenden Datenpaketes und des endgültigen gemessenen Frequenzbandes des vorhergehenden Datenpakets, das denselben Identifikationscode wie das betreffende Datenpaket einschließt.

**3.** Verfahren (50) nach einem der vorhergehenden Ansprüche, **dadurch gekennzeichnet, dass** es nach dem Schritt (52) der Entnahme des Identifikationscodes aus dem betreffenden Datenpaket einen Schritt (54) der Schätzung einer Anzahl von verlorenen Datenpaketen umfasst, wobei die verlorenen Datenpakete Datenpaketen entsprechen, die von dem dem Identifikationscode zugeordneten Endgerät (10) gesandt wurden, seit das vorhergehende Datenpaket, das den Identifikationscode einschließt, empfangen wurde, die aber nicht von dem Empfangssystem (20) empfangen wurden, wobei der theoretische Frequenzsprung für das betreffende Datenpaket in Abhängigkeit von der Anzahl von verlorenen Datenpaketen und der Sequenz von Frequenzsprüngen, die dem Identifikationscode zugeordnet ist, bestimmt wird.

4. Verfahren (50) nach Anspruch 3, **dadurch gekennzeichnet, dass**, wobei die Datenpakete einen von dem Endgerät (10) bei jedem neuen Senden inkrementierten Zähler einschließen, die Anzahl von verlorenen Paketen in Abhängigkeit von dem Zähler des betreffenden Datenpakets und dem Zähler des empfangenen vorhergehenden Datenpakets, das denselben Identifikationscode wie das betreffende Datenpaket einschließt, geschätzt wird.

5. Verfahren (50) nach Anspruch 3, **dadurch gekennzeichnet, dass**, wobei die Datenpakete einen Teil, der mit Hilfe eines Drehschlüssels verschlüsselt wird, der von dem Endgerät (10) bei jedem neuen Senden inkrementiert wird, die Anzahl von verlorenen Paketen in Abhängigkeit von dem für das betreffende Datenpaket verwendeten Drehschlüssel und dem Drehschlüssel, der für das empfangene vorhergehende Datenpaket verwendet wird, das denselben Identifikationscode wie das betreffende Datenpaket einschließt, geschätzt wird.

6. Verfahren (50) nach Anspruch 3, **dadurch gekennzeichnet, dass**, wobei die Datenpakete von einem Endgerät (10) mit einer vordefinierten Periode gesandt werden, die Anzahl von verlorenen Paketen in Abhängigkeit von der Periode und einem Zeitabstand zwischen dem Empfang des betreffenden Datenpakets und dem Empfang des vorhergehenden Datenpakets, das denselben Identifikationscode wie das betreffende Datenpaket einschließt, geschätzt wird.

7. Verfahren (50) nach einem der vorhergehenden Ansprüche, **dadurch gekennzeichnet, dass** die nacheinander mit einem selben Identifikationscode empfangenen Datenpakete als von dem dem Identifikationscode zugeordneten Endgerät (10) gesandt nur dann betrachtet werden, wenn jede betreffende Frequenzsprungabweichung für die Authentifizierung einen Absolutwert kleiner als ein Grenzwert hat.

8. Verfahren (50) nach Anspruch 7, **dadurch gekennzeichnet, dass** der für das betreffende Datenpaket zu verwendende Grenzwert in Abhängigkeit von einem Zeitabstand zwischen dem Empfang des betreffenden Datenpakets und dem Empfang des vorhergehenden Datenpakets, das denselben Identifikationscode wie das betreffende Datenpaket einschließt, bestimmt wird.

9. Verfahren (50) nach einem der vorhergehenden Ansprüche, **dadurch gekennzeichnet, dass**, wobei mehrere Frequenzsprungabweichungen für die Authentifizierung betrachtet werden, die nacheinander mit einem selben Identifikationscode empfangenen Datenpakete als von dem dem Identifikationscode zugeordneten Endgerät (10) gesandt nur dann betrachtet werden, wenn ein vordefiniertes Identifikationskriterium von der Gesamtheit der für die Authentifizierung betrachteten Frequenzsprungabweichungen überprüft ist.

10. Verfahren (50) nach Anspruch 9, **dadurch gekennzeichnet, dass** das Authentifizierungskriterium überprüft ist, wenn die Anhäufung der für die Authentifizierung betrachteten Frequenzsprungabweichungen kleiner als ein vordefinierter Grenzwert ist.

11. Verfahren (50) nach einem der vorhergehenden Ansprüche, **dadurch gekennzeichnet, dass** es ferner für jedes vom Empfangssystem empfangene Datenpaket umfasst:

- durch dieses Empfangssystem das Messen eines Frequenzverschiebungsmotivs eines Oszillators, der zur Erzeugung des betreffenden Datenpakets gedient hast, und
- das Vergleichen des gemessenen Frequenzverschiebungsmotivs mit einem vordefinierten Frequenzverschiebungsmotiv, das dem aus dem betreffenden Datenpaket entnommenen Identifikationscode zugeordnet ist.

12. Verfahren (50) nach einem der vorhergehenden Ansprüche,
**dadurch gekennzeichnet, dass** das Empfangssystem einen Verbindungsserver umfasst, der mit mindestens einer Station zusammenwirkt,
und dass die Vorgänge des Authentifizierungsverfahrens zwischen der Station und dem Server verteilt sind.

13. Verfahren (50) nach Anspruch 12, **dadurch gekennzeichnet, dass**:

- die Station die Frequenzbandmessungen der Datenpakete, die sie empfängt, durchführt; und
- der Server die Gesamtheit der von jeder Station empfangenen Datenpakete und die von jeder Station gemessenen Frequenzbänder sammelt und zumindest die restlichen Vorgänge des Authentifizierungsverfahrens durchführt.

14. Computerprogrammprodukt, **dadurch gekennzeichnet, dass** es eine Gesamtheit von Programmcodebefehlen umfasst, die, wenn sie von einem Prozessor ausgeführt werden, ein Authentifizierungsverfahren (50) nach einem der vorhergehenden Ansprüche einsetzen.

15. Empfangssystem eines digitalen Telekommunikationssystems, das geeignet ist, von Endgeräten (10) gesandte Datenpakete zu empfangen, wobei das Empfangssystem mindestens eine Station umfasst, wobei jedes Datenpaket einen Identifikationscode des Endgeräts (10), das das Datenpaket gesandt hat, einschließt, wobei jedes Endgerät (10) nacheinander Datenpakete in einer Vielzahl von verschiedenen Frequenzbändern nach einer spezifischen vordefinierten Sequenz von Frequenzsprüngen des Endgeräts sendet, **dadurch gekennzeichnet, dass** es Mittel umfasst, die eingerichtet sind, um die empfangenen Datenpakete nach einem Verfahren nach einem der Ansprüche 1 bis 13 zu authentifizieren.

16. Telekommunikationssystem, umfassend:

- Endgeräte, wobei jedes Endgerät geeignet ist, nacheinander Datenpakete in einer Vielzahl von verschiedenen Frequenzbändern nach einer spezifischen vordefinierten Sequenz von Frequenzsprüngen des Endgeräts zu senden, wobei jedes Datenpaket einen Identifikationscode des Endgeräts (10), das das Datenpaket gesandt hat, einschließt,
- Stationen, die mit einem Verbindungsserver zusammenwirken, um das Authentifizierungsverfahren nach einem der Ansprüche 1 bis 13 durchzuführen,
- wobei jede Station geeignet ist, die Frequenzbandmessungen der Datenpakete, die sie empfängt, durchzuführen; und
- wobei der Server geeignet ist, die Gesamtheit der von jeder Station empfangenen Datenpakete und die von jeder Station gemessenen Frequenzbänder zu sammeln, und geeignet ist, zumindest die restlichen Vorgänge des Authentifizierungsverfahrens durchzuführen.

**Claims**

1. Method (50) for authenticating data packets transmitted by terminals (10) and received by a receiver system (20) comprising at least one station, each data packet incorporating an identification code of the terminal (10) having transmitted said data packet, each terminal (10) successively transmitting data packets in a plurality of different frequency bands according to a predefined frequency hop sequence specific to said terminal, **characterized in that** it comprises, for each data packet received by said receiver system (20):

- (51) measuring, by said station, the frequency band in which the data packet under consideration has been received,
- (52) extracting the identification code contained in said data packet under consideration,
- calculating a frequency hop, from said measured frequency band of the packet under consideration and a frequency band measured by the receiver system for a previous data packet received incorporating said extracted identification code,
- (55) determining, according to the predetermined frequency hop sequence associated with said identification code extracted from the data packet under consideration, a theoretical frequency hop applied from said previous data packet received,
- (56) calculating a frequency hop gap as a function of said theoretical frequency hop and said calculated frequency hop,

and **in that** the method (50) of authentication further comprises a step (58) of determining whether the data packets successively received with the same identification code have been transmitted by the terminal (10) associated with said identification code as a function of at least one frequency hop gap calculated for one of said data packets.

2. Method (50) according to claim 1, **characterized in that** the frequency band of a data packet is measured several times during said data packet under consideration, the frequency hop gap being calculated by considering the final measured frequency band of the data packet under consideration and the final measured frequency band of the preceding data packet incorporating the same identification code as said data packet under consideration.

3. Method (50) according to one of the preceding claims, **characterized in that** it comprises, after the step (52) of extracting the identification code from the data packet under consideration, a step (54) of estimating a number of lost data packets, said lost data packets corresponding to data packets that have been transmitted by the terminal (10) associated with said identification code since the previous data packet incorporating said identification code was received, but that have not been received by the receiver system (20), the theoretical frequency hop for the data packet under consideration being determined according to the number of lost data packets and the frequency hop sequence associated with said identification code.

4. Method (50) according to claim 3, **characterized in that** the data packets incorporating a counter incremented by the terminal (10) at each new transmission, the number of lost packets is estimated as a function of the counter of the data packet under consideration and the counter of the previous data packet received incorporating the same identification code as said data packet under consideration.

5. Method (50) according to claim 3, **characterized in that** the data packets comprising an part encrypted by means of a rotating key incremented by the terminal (10) at each new transmission, the number of lost packets is estimated as a function of the rotating key used for the data packet under consideration and the rotating key used for the previous data packet received incorporating the same identification code as said data packet under consideration.

6. Method (50) according to claim 3, **characterized in that** the data packets being transmitted by a terminal (10) with a predefined period, the number of lost packets is estimated according to said period and a time difference between the reception of said data packet under consideration and the reception of the previous data packet incorporating the same identification code as said data packet under consideration.

7. Method (50) according to one of the preceding claims, **characterized in that** the data packets received successively with the same identification code are considered as having been sent by the terminal (10) associated with said identification code only if each frequency hop gap considered for the authentication is of absolute value less than a threshold value.

8. Method (50) according to claim 7, **characterized in that** the threshold value to be used for the data packet under consideration is determined as a function of a time difference between the reception of the said data packet under consideration and the reception of the previous data packet incorporating the same identification code as said data packet under consideration.

9. Method (50) according to one of the preceding claims, **characterized in that** several frequency hop gaps being considered for authentication, data packets received successively with the same identification code are considered to have been transmitted by the terminal (10) associated with said identification code only if a predefined authentication criterion is verified by all of said frequency hop gaps considered for authentication.

10. Method (50) according to claim 9, **characterized in that** the authentication criterion is satisfied if the sum of the frequency hop gaps considered for the authentication is less than a predefined threshold value.

11. Method (50) according to one of the preceding claims, **characterized in that** it further comprises, for each data packet received by said receiver system:

    - measuring, by this receiver system, a frequency drift pattern of an oscillator used to generate the data packet under consideration, and
    - comparing the measured frequency drift pattern with a predefined frequency drift pattern associated with said identification code extracted from said data packet under consideration.

12. Method (50) according to one of the preceding claims, **characterized in that** the receiver system comprises a central server cooperating with at least one station, and **in that** the operations of the authentication method are distributed between said station and said server.

13. Method (50) according to claim 12, **characterized in that**:

    - the station performs the frequency band measurements of the data packets it receives; and
    - the server collects all the data packets received by each station and the frequency bands measured by each station, and carries out at least the remaining operations of the authentication method.

14. Computer program product, **characterized in that** it comprises a set of program code instructions which, when executed by a processor, implement an authentication method (50) according to one of the preceding claims.

15. Receiver system of a digital telecommunications system, adapted to receive data packets transmitted by terminals (10), said receiver system comprising at least one station, each data packet incorporating an identification code of the terminal (10) having transmitted said data packet, each terminal (10) successively transmitting data packets in a plurality of different frequency bands according to a predefined frequency hop sequence specific to said terminal, **characterized in that** it comprises means configured to authenticate the data packets received according to a method according to one of claims 1 to 13.

16. Telecommunication system comprising:

    - terminals, each terminal being able to successively transmit data packets in a plurality of different frequency bands according to a predefined frequency hop sequence specific to said terminal, each data packet incorporating an identification code of the terminal (10) having transmitted said data packet,

- stations cooperating with a central server to carry out the authentication method according to one of claims 1 to 13,
- each station being able to perform frequency band measurements of the data packets it receives; and
- the server being able to collect all the data packets received by each station and the frequency bands measured by each station, and being able to carry out at least the remaining operations of said authentication method.

EP 2 865 158 B1

Fig. 1

Fig. 2

17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2001004375 A
- WO 2011154466 A
- US 20010004375 A